# EUROPEAN PATENT APPLICATION

(11) **EP 4 794 105 A1**
(43) Date of publication of application: **19.08.2026**
(21) Application number: 26156889.3
(22) Date of filing: 06.02.2026
(51) Int. Cl.: H01M 50/533, H01M 10/058, H01M 4/13

(54) **ELECTRODE SHEET, SECONDARY BATTERY AND ELECTRONIC DEVICE**

(30) Priority: 18.02.2025 CN 202520264615 U
(71) Applicant: AESC Japan Ltd., Yokohama-shi, Kanagawa 220-0012 (JP)
(72) Inventor: DAI, Liangzhen, Jiangyin City, Wuxi City (CN); CHEN, Shenghua, Jiangyin City, Wuxi City (CN); ZHANG, Shuhan, Jiangyin City, Wuxi City (CN); KONG, Deyong, Jiangyin City, Wuxi City (CN); CHEN, Lipeng, Jiangyin City, Wuxi City (CN); YIN, Zhe, Jiangyin City, Wuxi City (CN)
(74) Representative: Becker, Eberhard

(57) **Abstract**

An electrode sheet (100), a secondary battery (500), and an electronic device (1000) are provided. The electrode sheet (100) includes: an electrode sheet body (160), including a current collector (110) and an active material layer (130), the current collector (110) has two opposite surfaces, and the two surfaces are respectively coated with active material layers (130); and a tab (150), extending from the electrode sheet body (160), the tab (150) is provided with a second stiffener region (192) and a first stiffener region (191), the second stiffener region (192) is disposed between the first stiffener region (191) and the active material layer (130), a stiffener (190) is disposed in the first stiffener region (191) and the second stiffener region (192), a depth (H1) of the stiffener (190) in the first stiffener region (191) is greater than a depth (H2) of the stiffener (190) in the second stiffener region (192).

## Description

### BACKGROUND

### Technical Field

The present disclosure relates to the field of battery technology, and more specifically, relates to an electrode sheet, a secondary battery, and an electronic device.

### Description of Related Art

In the field of new-energy power batteries, secondary batteries generally utilize copper foil and aluminum foil as current collectors of electrode sheets. As the thickness of the foil is reduced, the foil material inherently exhibits extremely low flexural strength, rendering it prone to folding of the tabs and even tearing, which materially and adversely affects battery manufacturing efficiency and yield.

In the related art, the flexural strength of the tabs is enhanced by disposing stiffener on surfaces of the tabs; as compared with tabs lacking such ribs, this increases the strength of the tabs and reduces the likelihood of tab bending. However, existing stiffener configurations still suffer from deficiencies.

### SUMMARY

In view of the problems existing in the related technology, the purpose of the present disclosure lies in providing an electrode sheet, a secondary battery, and an electronic device, which may reduce the possibility of tab bending while avoiding detachment of an active material of the electrode sheet.

To achieve the above purpose, an embodiment of the present disclosure provides an electrode sheet, which includes: an electrode sheet body, including a current collector and an active material layer, the current collector has two opposite surfaces along a thickness direction of the current collector, and the two surfaces are respectively coated with the active material layer; and a tab, extending from the electrode sheet body along a first direction, the tab is provided with a second stiffener region and a first stiffener region along the first direction, wherein, along the first direction, the second stiffener region is disposed between the first stiffener region and the active material layer, a stiffener is provided in the first stiffener region and the second stiffener region, wherein, a depth of the stiffener in the first stiffener region is greater than a depth of the stiffener in the second stiffener region.

In some embodiments, the tab includes a tab bare foil region and a tab coated region. The tab coated region is connected between the tab bare foil region and the electrode sheet body. The active material layer is also coated in the tab coated region. The tab is also provided with a third stiffener region. The third stiffener region is located at a portion of a surface of the active material layer in the tab coated region adjoining a boundary. A stiffener in the third stiffener region and the stiffener in the second stiffener region form a continuous stiffener, wherein, a depth of the stiffener in the third stiffener region is greater than the depth of the stiffener in the second stiffener region.

In some embodiments, a ratio between the depth of the stiffener in the third stiffener region and a thickness of the active material layer where the stiffener is located is 30%-85%.

In some embodiments, the stiffener in the first stiffener region, the stiffener in the second stiffener region, and the stiffener in the third stiffener region form at least one continuous stiffener; or, the stiffener in the first stiffener region and the stiffener in the second stiffener region form at least one continuous stiffener.

In some embodiments, a ratio of a width of the at least one continuous stiffener to a corresponding depth of a location of each of the at least one continuous stiffener is a, 1.1≤a≤6.67.

In some embodiments, the tab is connected with a first edge of the electrode sheet body. The first edge extends along a second direction perpendicular to the first direction. The stiffener in the third stiffener region has an end portion in a direction opposite to the first direction, and a gap is provided between the end portion and the first edge along the direction opposite to the first direction.

In some embodiments, the stiffener in the third stiffener region includes two stiffeners arranged at an angle, and the two stiffeners are connected with each other to form a V-shaped structure.

In some embodiments, the electrode sheet further includes a conductive layer. A portion of the conductive layer is located between the active material layer of the electrode sheet body and the current collector, and another portion of the conductive layer extends along the first direction to the third stiffener region. The active material layer in the tab coated region covers the another portion of the conductive layer, wherein, the stiffener in the third stiffener region has an end portion in a direction opposite to the first direction, and the end portion overlaps with the conductive layer along a thickness direction of the electrode sheet.

In some embodiments, the tab is connected with a first edge of the electrode sheet body, and a second edge of the tab and the first edge are disposed on two sides of the tab in the first direction. Each continuous stiffener has at least one first transition portion and at least one second transition portion, and the first transition portion and the second transition portion are alternately provided in a width direction of the tab perpendicular to the first direction and are connected through a connecting portion. The first transition portion and the second transition portion are arc transition regions, an inner angle of the first transition portion faces the first edge, and an inner angle of the second transition portion faces the second edge. A maximum width of the arc transition region is y1, a width of the connecting portion perpendicular to an extending direction of the connecting portion is y2, 1.2≤y1/y2≤2.5.

In some embodiments, a spacing between vertices of two of the adjacent first transition portions of a single one of the continuous stiffener is b, wherein, in the width direction of the tab, the tab has a maximum width C1 and a minimum width C2, wherein: 1.5≤C1/b≤3, and/or, within a range of 1.5≤C2/b≤3.

Embodiments of the present disclosure further provide a secondary battery. The secondary battery includes an electrode assembly, the electrode assembly includes a positive electrode sheet, a negative electrode sheet, and a separator located between the positive electrode sheet and the negative electrode sheet, wherein, at least one of the positive electrode sheet and the negative electrode sheet is the electrode sheet of any one of the above embodiments.

In some embodiments, the negative electrode sheet of the secondary battery is the electrode sheet of any one of the above embodiments.

Embodiments of the present disclosure further provide an electronic device, which includes the secondary battery of any one of the above embodiments.

### BRIEF DESCRIPTION OF THE DRAWINGS

In order to more clearly describe the technical solutions in the embodiments of the present disclosure or the related art, the following will briefly introduce the accompanying drawings required to be used in the description of the embodiments or the related art. Obviously, the accompanying drawings in the following description are some embodiments of the present disclosure. For those of ordinary skill in the art, other accompanying drawings may also be obtained according to these accompanying drawings without creative efforts.
FIG. 1A to FIG. 1F are schematic diagrams illustrating different manufacturing stages of manufacturing an electrode sheet according to an embodiment of the present disclosure.
FIG. 2 is a partially enlarged diagram at a region A1 of the electrode sheet shown in FIG. 1F.
FIG. 3A and FIG. 3B are sectional diagrams of the first stiffener region and the second stiffener region of the tab according to the present disclosure, respectively.
FIG. 3C is a sectional schematic diagram of the third stiffener region of the tab according to the present disclosure.
FIG. 3D is a schematic diagram of one continuous stiffener according to an embodiment of the present disclosure.
FIG. 4 illustrates a sectional schematic diagram of an electrode sheet according to some other embodiments.
FIG. 5A to FIG. 5B are schematic diagrams illustrating different manufacturing stages of manufacturing an electrode sheet according to another embodiment of the present disclosure.
FIG. 6 illustrates a schematic diagram of an electrode sheet according to yet another embodiment of the present disclosure.
FIG. 7 illustrates a perspective schematic diagram of a secondary battery according to an embodiment of the present disclosure.
FIG. 8 illustrates a sectional schematic diagram of a secondary battery according to an embodiment of the present disclosure.
FIG. 9 is a sectional schematic diagram of the electrode assembly of the secondary battery in FIG. 8.
FIG. 10 illustrates a schematic diagram when an electronic device of an embodiment of the present disclosure is a vehicle.

### DESCRIPTION OF THE EMBODIMENTS

For better understanding the spirit of the embodiments of the present disclosure, the following further describes it in conjunction with some preferred embodiments of the present disclosure.

The embodiments of the present disclosure will be described in detail below. Throughout the specification of the present disclosure, the same or similar components and components having the same or similar functions are denoted by similar reference numerals. The embodiments related to the accompanying drawings described herein are illustrative, diagrammatic, and used for providing a basic understanding of the present disclosure. The embodiments of the present disclosure should not be construed as limitations to the present disclosure.

As used herein, the terms "approximately", "generally", "substantially" and "about" are provided to describe and illustrate small variations. When used in conjunction with an event or circumstance, the terms may refer to instances in which the event or circumstance occurs precisely as well as instances in which the event or circumstance occurs in close approximation.

In this specification, unless otherwise specified or limited, relative terms such as: "central", "longitudinal", "lateral", "front", "rear", "right", "left", "internal", "external", "lower", "higher", "horizontal", "vertical", "above", "below", "upper", "lower", "top", "bottom" and their derivative terms (for example, "horizontally", "downwardly", "upwardly", etc.) should be construed as referring to the directions described in the discussion or illustrated in the accompanying drawings. These relative terms are only used for convenience of description and do not require the present disclosure to be constructed or operated in a specific orientation.

For convenience of description, "first", "second", "third", etc. may be used herein to distinguish different components of a drawing or a series of drawings. "First", "second", "third", etc. are not intended to describe corresponding components.

A secondary battery refers to a battery in which an active material may be activated through charging after the battery is discharged for continue use. The types of secondary batteries may include nickel-metal hydride batteries, nickel-cadmium batteries, lead-acid batteries, lithium-ion batteries, polymer lithium-ion batteries, etc. The electrode assembly of a secondary battery mainly includes a positive electrode sheet and a negative electrode sheet, and the positive electrode sheet and the negative electrode sheet are separated by a separator. The positive electrode sheet, the negative electrode sheet and the separator form an electrode assembly through winding or stacking, and then the electrode assembly is sealed in a housing to form a secondary battery.

The positive electrode sheet may include a positive electrode current collector and a positive electrode active material layer, and the positive electrode active material layer is coated on a portion of a surface of the positive electrode current collector. The negative electrode sheet may include a negative electrode current collector and a negative electrode active material layer, and the negative electrode active material layer is coated on a portion of a surface of the negative electrode current collector. In some embodiments, for example, in a lithium-ion battery, a material of the positive electrode current collector may be aluminum. The positive electrode active material layer may include a positive electrode active material, and the positive electrode active material may be lithium cobalt oxide, lithium iron phosphate, ternary lithium or lithium manganese oxide, etc. For high-nickel ternary lithium batteries, the positive electrode active material may be a ternary material composed of three elements, including: nickel, cobalt, and manganese (or aluminum). A material of the negative electrode current collector may be copper. The negative electrode active material layer may include a negative electrode active material, and the negative electrode active material may be carbon or silicon, etc. A material of the separator may be, for example, PP (polypropylene) or PE (polyethylene), etc.

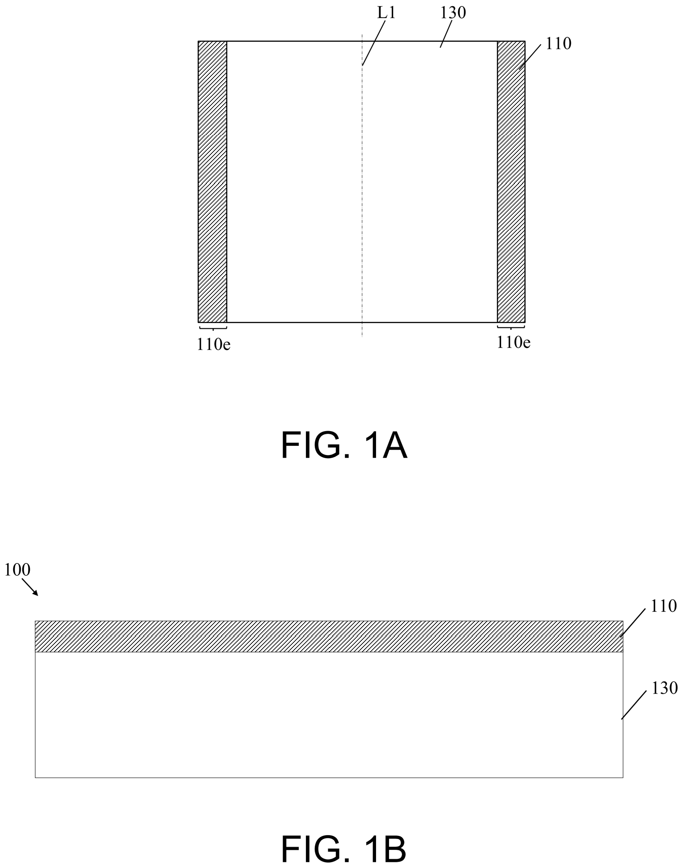

FIG. 1A to FIG. 1F are schematic diagrams illustrating different manufacturing stages of manufacturing an electrode sheet according to an embodiment of the present disclosure. First, referring to FIG. 1A, an active material layer 130 is coated on two surfaces of a current collector 110 opposite to each other along its thickness direction. The active material layer 130 may be coated on the current collector 110 through a coating device. An edge portion 110e in a width direction of the current collector 110 is not coated with the active material layer 130 to form a bare foil region. In some embodiments of forming the negative electrode sheet, the current collector 110 is the negative electrode current collector, and the active material layer 130 is the negative electrode active material layer. In some embodiments, the material of the negative electrode current collector may be, for example, copper, and a thickness thereof may be 4.5-6 micrometers. In some embodiments of forming the positive electrode sheet, the current collector 110 is the positive electrode current collector, and the active material layer 130 is the positive electrode active material layer. In some embodiments, the material of the positive electrode current collector may be aluminum, and a thickness thereof may be 10-12 micrometers. After coating the active material layer 130, the current collector 110 and the active material layer 130 may be cut along a dashed line L1, thereby obtaining a single electrode sheet 100 for forming a single electrode assembly as shown in FIG. 1B.

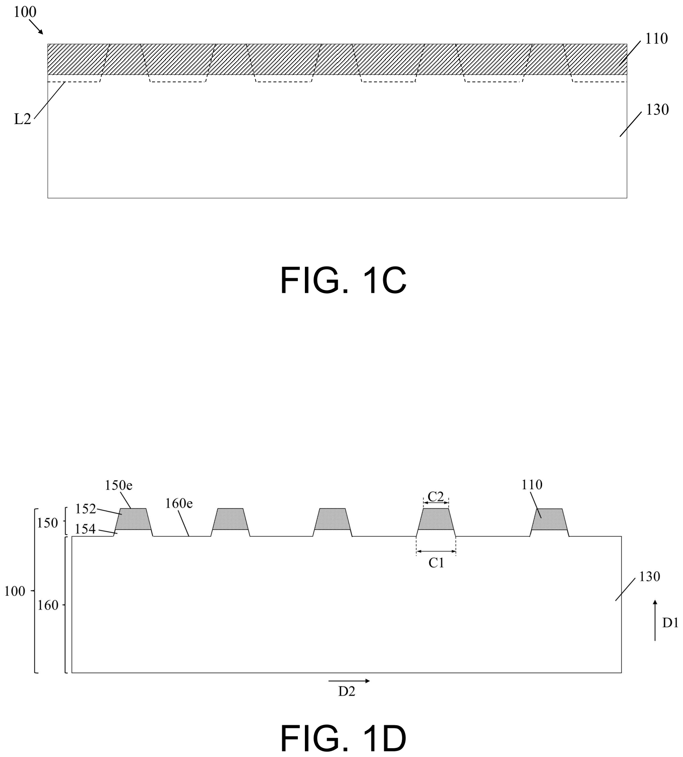

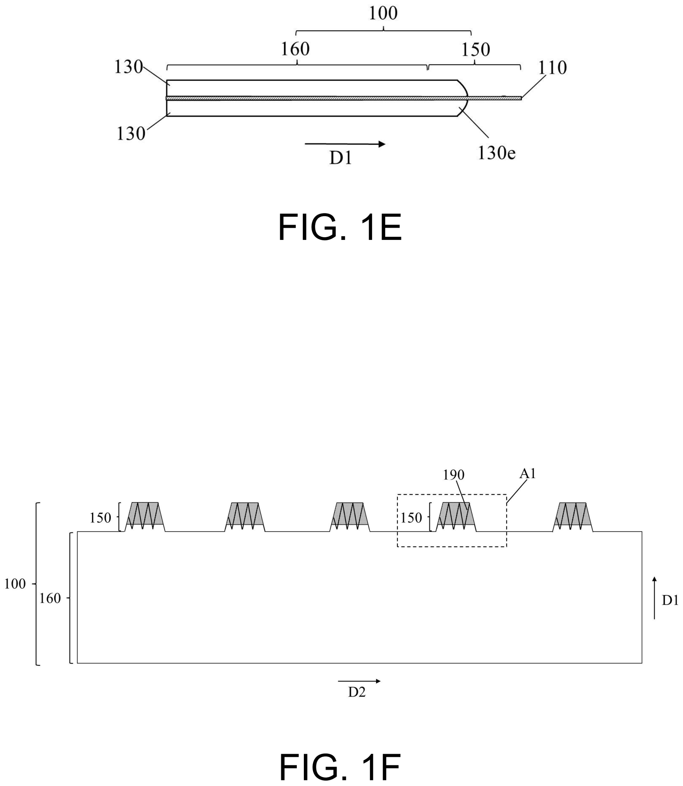

Referring to FIG. 1C, according to a dashed line L2, a side of the current collector 110 of the electrode sheet 100 that is not coated with the active material may be cut, and this cutting process may be referred to as tab cutting. After cutting, referring to FIG. 1D and FIG. 1E, FIG. 1E is a sectional diagram of FIG. 1D, referring to FIG. 1D, a plurality of tabs 150 spaced apart along a length direction of the electrode sheet 100 are formed. An uncut portion of the current collector 110 and the active material layer 130 may be referred to as an electrode sheet body 160. Referring to FIG. 1E, the electrode sheet body 160 includes the current collector 110 and the active material layer 130, wherein the active material layer 130 covers two surfaces of the current collector 110 opposite to each other along its thickness direction. In addition, a thinned region 130e may be formed at an edge of the active material layer 130 along a direction D1 (which may be referred to as a first direction), and the thinned region 130e is connected to a uniformly coated region of the active material layer 130. A thickness of the thinned region 130e gradually decreases along the direction D1.

The tab 150 extends from the electrode sheet body 160 along the direction D1 (parallel to a width direction of the electrode sheet). The tab 150 is connected to a first edge 160e of the electrode sheet body 160, and the first edge 160e extends along a direction D2 (which may be referred to as a second direction) perpendicular to the direction D1. The first edge 160e and a second edge 150e of the tab 150 are disposed on two sides of the tab 150 in the direction D1. The direction D2 may be a width direction of the tab 150, and a width of each tab 150 may decrease with an increasing distance away from the electrode sheet body 160. In the width direction of the tab, each tab 150 may have the maximum width C1 and the minimum width C2. Specifically, in this embodiment, the tab 150 may include a tab bare foil region 152, and the tab bare foil region 152 is formed by the current collector 110 not covered by the active material layer 130. The tab 150 may also include a tab coated region 154, and the tab coated region 154 is connected between the tab bare foil region 152 and the electrode sheet body 160. The tab coated region 154 protrudes from the edge 160e of the electrode sheet body 160 perpendicular to the direction D1. In addition, the active material layer 130 is also coated in the tab coated region 154. The present disclosure uses the example of forming tabs by cutting the current collector coated with the active material for illustration, and the tabs involved in the present disclosure may also be connected to the electrode sheet body 160 through other methods such as welding.

Referring to FIG. 1F, a stiffener 190 formed on the surfaces of the respective tabs 150 are illustrated. In some embodiments, the stiffener 190 may be formed before or after tab cutting. Preferably, the stiffener is formed on the tab before tab cutting. In some embodiments, before tab cutting, an embossing roller is provided to roll the tab to form the stiffener on the tab, and this method of forming the stiffener using an embossing roller may also be referred to as embossing.

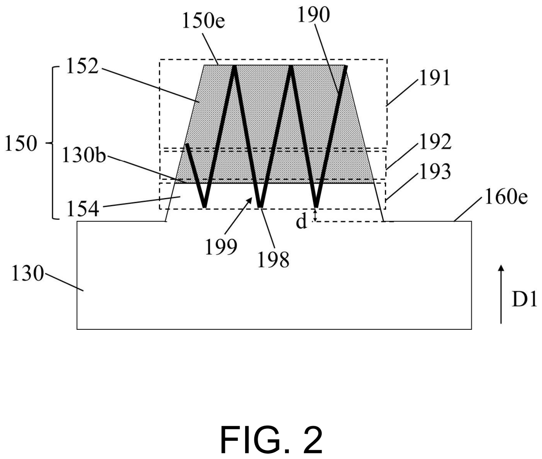

FIG. 2 is a partially enlarged diagram of a region A1 of the electrode sheet 100 shown in FIG. 1F. Referring to FIG. 2, the tab 150 may be provided with a second stiffener region 192 and a first stiffener region 191 along the direction D1. The second stiffener region 192 is disposed between the first stiffener region 191 and the active material layer 130. The first stiffener region 191 and the second stiffener region 192 are disposed in the tab bare foil region 152. The second stiffener region 192 is closer to a boundary 130b between the active material layer 130 and the tab bare foil region 152. The second stiffener region 192 is a region of the tab bare foil region 152 that is closer to the boundary 130b, and the first stiffener region 191 is a region of the tab bare foil region 152 that is farther from the boundary 130b.

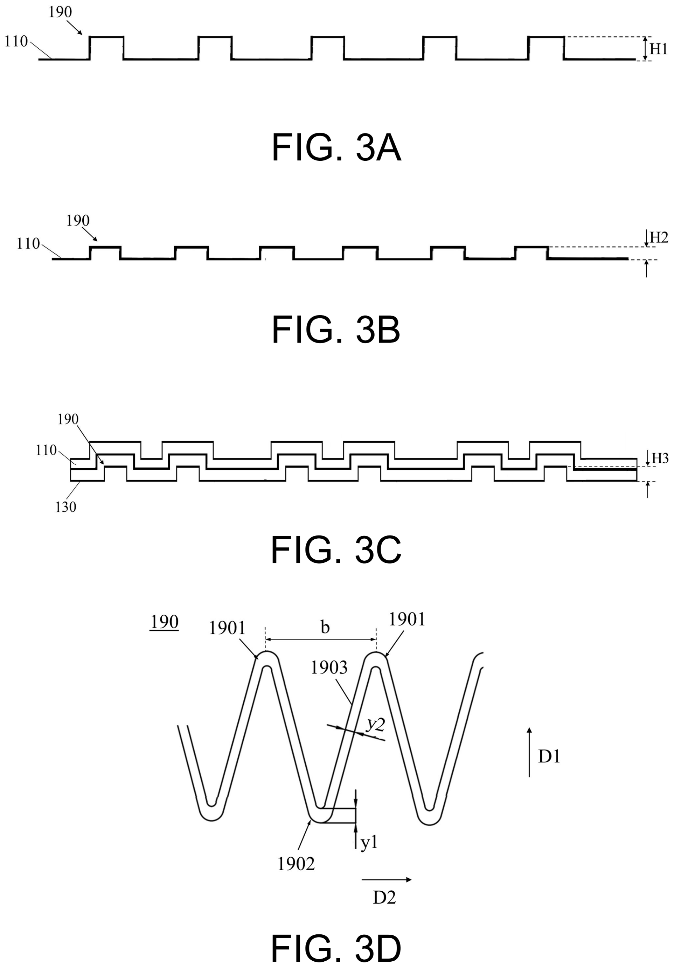

The stiffener 190 is disposed in both the first stiffener region 191 and the second stiffener region 192. FIG. 3A and FIG. 3B are sectional diagrams of the first stiffener region 191 and the second stiffener region 192 respectively, and the section is perpendicular to a thickness direction of the tab and passes through the tab along the length direction of the electrode sheet. Referring to FIG. 3A and FIG. 3B, the stiffener 190 in the first stiffener region 191 has a depth H1, and the stiffener 190 in the second stiffener region 192 has a depth H2. The depths H1 and H2 respectively refer to a depth of a recess generated on the surface of the tab in the region where the stiffener is located (specifically the surface of the current collector 110 in this embodiment), for example, due to rolling. The depth H1 of the stiffener 190 in the first stiffener region 191 is greater than the depth H2 of the stiffener 190 in the second stiffener region 192. In an embodiment, a minimum depth of the stiffener in the first stiffener region 191 is greater than a maximum depth of the stiffener in the second stiffener region 192. In another embodiment, an average depth of the stiffener in the first stiffener region 191 is greater than an average depth of the stiffener in the second stiffener region 192.

On the premise that the tab is not cracked by pressure, the deeper the stiffener formed on the tab, the smaller the possibility of folding. However, the second stiffener region 192 is close to the active material layer 130, and if the depth of the stiffener in the second stiffener region 192 is too deep, the stress applied to the second stiffener region during rolling is also greater, which may easily cause detachment of the active material at the boundary 130b. Therefore, in the technical solution of the present disclosure, by setting the depth H2 of the stiffener 190 in the second stiffener region 192 to be smaller than the depth H1 of the stiffener 190 in the first stiffener region 191, it is possible to avoid the detachment of the active material nearby caused by excessive stress due to the greater depth during the forming process (for example, roll forming) of the stiffener on the tab close to its root in the related art; in the meantime, the possibility of tab folding is reduced.

In addition, the tab 150 may also be provided with a third stiffener region 193. The third stiffener region 193 is located at a portion of the surface of the tab coated region 154 adjoining the boundary 130b, and stiffener is disposed in the third stiffener region 193. By extending the stiffener 190 into the tab coated region 154, the bending resistance strength provided by the stiffener for the tab may be increased.

FIG. 3C is a sectional diagram of the third stiffener region 193, and the section is perpendicular to the thickness direction of the tab and passes through the tab along the length direction of the electrode sheet. Referring to FIG. 3C, the stiffener 190 in the third stiffener region 193 has a depth H3, and the depth H3 refers to a depth of a recess generated by the surface of the tab in the region where the stiffener is located (specifically the surface of the active material layer 130 in this embodiment) being subjected to rolling. In some embodiments, the depth H3 of the stiffener 190 in the third stiffener region 193 is also greater than the depth H2 of the stiffener 190 in the second stiffener region 192, so as to use the stiffener in the third stiffener region 193 to increase the bending resistance strength provided by the stiffener for the tab. Further, the second stiffener region 192 with the smallest depth of the stiffener may be used for transition between the first stiffener region 191 and the third stiffener region 193. The technical solution of the present disclosure, by setting the depth of the stiffener in the second stiffener region 192 to be shallower than the depth of the stiffener in both the first stiffener region 191 and the third stiffener region 193, makes the depth of the stiffener 190 configured such that the depth change from the first stiffener region 191 to the third stiffener region 193 is varying, and the second stiffener region 192 with a smaller depth is provided for transition between the first stiffener region 191 and the third stiffener region 193, which may make the tab bending process easier when the electrode assembly is inserted into the housing, reduce the possibility of tab tearing, and avoid the stress generated by bending from being transmitted to the boundary 130b of the tab coated region 154 causing detachment of the active material.

If the second stiffener region 192 with a smaller depth is not provided for transition, the tab will be prone to folding at the boundary 130b.

In some embodiments, the stiffener in the first stiffener region 191 and the stiffener in the second stiffener region 192 form at least one continuous uninterrupted stiffener. In some embodiments, the stiffener in the third stiffener region 193 and the stiffener in the second stiffener region 192 form a continuous uninterrupted stiffener. In actual implementation, raised rib patterns may be designed on an embossing roller, and the embossing roller is provided to roll the electrode sheet to form the stiffener.

In some embodiments, a ratio between the depth H3 of the stiffener in the third stiffener region 193 and a thickness of the active material layer 130 where they are located is 30%-85%. In an example, the thickness of the active material layer in the third stiffener region 193 is uniform. In another example, the active material layer in the third stiffener region 193 has a thinned region 130e. It should be understood that at least a part of the stiffener in the third stiffener region 193 will be located in the thinned region 130e of the active material layer 130. For this part of the stiffener, a ratio between the depth at each position of the stiffener in the third stiffener region 193 and the thickness of the active material layer at that position is 30%-85%.

For the stiffener within the third stiffener region 193, if a ratio of the depth of the rib to the thickness of the active material layer 130 in which they are formed exceeds 85%, the rib becomes excessively deep, which readily leads to detachment of the active material. Conversely, if said ratio is less than 30%, the rib becomes insufficiently deep, resulting in a reduced bending strength of the tab. By setting the ratio between the depth of the stiffener within the third stiffener region 193 and the thickness of the active material layer 130 to range from 30% to 85%, detachment of the active material may be avoided while ensuring sufficient bending strength of the tab.

In some embodiments, the stiffener in the first stiffener region 191, the stiffener in the second stiffener region 192 and the stiffener in the third stiffener region 193 form at least one continuous uninterrupted stiffener, connecting the tab bare foil region 152 and the tab coated region 154 into a whole. Further, the active material layer 130 coated in the tab coated region 154 is utilized to support the tab bare foil region 152 and improve the overall bending resistance of the tab. In actual implementation, raised rib patterns may be designed on an embossing roller, and the embossing roller is provided to roll the electrode sheet to form the stiffener.

In this embodiment, the stiffener 190 on the tab 150 may include a plurality of V-shaped structure stiffeners connected in sequence, each V-shaped structure stiffener is composed of two stiffeners provided at an angle, and the V-shaped angle at the bottom of each V-shaped structure stiffener extends into the tab coated region 154. The stiffener in the third stiffener region 193 may be a part of the stiffener 190 extending into the tab coated region 154. Therefore, the stiffener in the third stiffener region 193 include at least two stiffeners arranged at an angle, and the two stiffeners are connected to each other to form at least one V-shaped structure 199. In the case of setting a plurality of the V-shaped structures 199, the plurality of V-shaped structures 199 in the third stiffener region 193 may be spaced apart along the length direction of the electrode sheet. This V-shaped structure of the stiffener 190 may provide stronger tab stability, and the V-shaped structure 199 extending into the tab coated region 154 may further improve the bending resistance of the tab 150.

In some embodiments, along a reverse direction of the direction D1, the stiffener in the third stiffener region 193 have an end portion 198, and in this embodiment, the end portion 198 is an end portion of the V-shaped structure 199. Along the reverse direction of the direction D1, there is a gap d between the end portion 198 and the edge 160e of the electrode sheet body 160, and a dimension of the gap d along the reverse direction of the direction D1 is >0. If the stiffener 190 enters the region of the electrode sheet body 160, in this condition, the stiffener 190 may easily overlap with a projection of the active material layer of another electrode sheet (for example, a positive electrode sheet) in the secondary battery, thereby causing problems such as edge lithium plating. By setting the gap d greater than zero to space the end portion 198 of the stiffener 190 apart from the edge 160e of the electrode sheet body 160 to avoid the stiffener 190 from entering the region of the electrode sheet body 160, problems such as edge lithium plating in the secondary battery may be avoided when the electrode sheet 100 is provided to form a secondary battery.

FIG. 3D is a schematic diagram of one continuous stiffener 190 according to an embodiment of the present disclosure. Referring to FIG. 3D, each continuous stiffener 190 has at least one first transition portion 1901 and at least one second transition portion 1902. The first transition portion 1901 and the second transition portion 1902 are alternately disposed in the width direction of the tab perpendicular to the direction D1, and are connected through a connecting portion 1903. The first transition portion 1901 protrudes along the direction D1, and the second transition portion 1902 protrudes along the reverse direction of the direction D1. In this embodiment, the first transition portion 1901 and the second transition portion 1902 are respectively arc transition regions. An inner angle of the first transition portion 1901 faces the first edge 160e (for example, see FIG. 1D), and an inner angle of the second transition portion 1902 faces the second edge 150e (for example, see FIG. 1D). A maximum width of the arc transition region (the first transition portion 1901, the second transition portion 1902) in a radial direction is y1 (at this condition, y1 is a maximum width y of the single continuous stiffener 190), a width of the connecting portion 1903 perpendicular to its extending direction is y2, and a ratio of y1 to y2 ranges from 1.2 to 2.5, that is, 1.2≤y1/y2≤2.5. If y1/y2 is lower than a lower limit value 1.2, it is difficult to form a smooth chamfer of the arc transition region, and the tab 150 may easily be damaged when forming (for example, rolling) the stiffener; if y1/y2 is higher than an upper limit value 2.5, wrinkles may easily be generated in the region between adjacent continuous stiffeners 190 during the process of forming (for example, rolling) the stiffener, for example, wrinkles may easily be generated in a triangular region formed by the continuous stiffener 190, which is not favorable for the subsequent welding of the tab 150.

In addition, in some embodiments, a spacing between vertices of two of the adjacent first transition portions 1901 of the single continuous stiffener 190 is b. In some embodiments, a ratio of the maximum width C1 (as described above with reference to FIG. 1D) of the tab 150 to b is in the range of 1.5-3, 1.5≤C1/b≤3. A ratio of the minimum width C2 (as described above with reference to FIG. 1D) of the tab 150 to b is in the range of 1.5-3, 1.5≤C2/b≤3. When C1/b and/or C2/b is greater than 1.5, it may be ensured that at least one W-shaped continuous stiffener 190 is formed on the tab 150 after forming the stiffener, for example, by rolling, so as to ensure the reinforcing effect. However, if C1/b and/or C2/b is too large, for example, greater than 3, the continuous stiffener 190 formed in this condition are too dense in the width direction of the tab, and may easily crush the tab.

In some embodiments, a ratio of the width of the at least one continuous stiffener 190 (for example, any one of the above y1 and y2) to corresponding depths of various locations is a. Specifically, the ratio of the width of the at least one continuous stiffener 190 to the depth of the recess along the thickness direction of the tab at various locations may be a, 1.1≤a≤6.67. If the ratio a is less than 1.1, the width of the stiffener 190 is relatively too narrow, the stress points at the edge are relatively concentrated, and cracking problems may easily occur. If the ratio a is greater than 6.67, the depth of the stiffener is relatively too small, and after forming the stiffener (for example, by embossing with the embossing roller), the depth of the recess of the stiffener may not meet the reinforcing requirements of the tab.

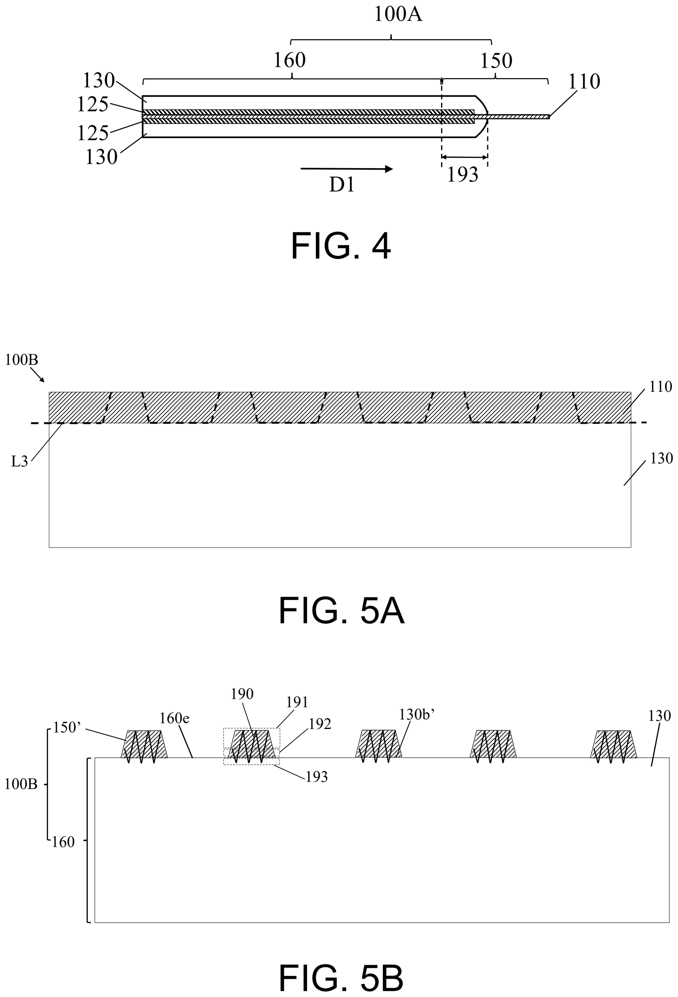

FIG. 4 illustrates a sectional diagram of an electrode sheet 100A according to some other embodiments. Various aspects of the electrode sheet 100A shown in FIG. 4 may be similar to those of the electrode sheet 100 described above with reference to FIG. 1A to FIG. 3D, and only the differences of the electrode sheet 100A are described below. Referring to FIG. 4, in this embodiment, the electrode sheet 100A may further include a conductive layer 125. A portion of the conductive layer 125 is located between the active material layer 130 of the electrode sheet body 160 and the current collector 110. Another portion of the conductive layer 125 extends along the direction D1 to the third stiffener region 193, and is disposed between the active material layer in the third stiffener region 193 and the current collector 110. This another portion of the conductive layer 125 is covered by the active material layer 130 in the tab coated region of the tab 150. The active material layer 130 in the third stiffener region 193 may extend beyond the conductive layer 15 along the direction D1. An end portion (such as the end portion 198 in FIG. 2) of the stiffener in the third stiffener region 193 overlaps with the conductive layer 125 along the thickness direction of the electrode sheet, that is, the end portion of the stiffener in the third stiffener region 193 extends onto the active material layer 130 above the conductive layer 125. The conductive layer 125 may be a metal conductive layer, may also be a carbon material layer, or may also be a composite material of carbon material and metal particles, etc. In this embodiment, by setting the conductive layer 125 in the electrode sheet, the adhesion force and/or supporting force of the conductive layer to the active material may be utilized to avoid detachment of the active material layer 130 during the process of forming the stiffener.

FIG. 5A to FIG. 5B are schematic diagrams illustrating different manufacturing stages of manufacturing an electrode sheet 100B according to another embodiment of the present disclosure. In this embodiment, as shown in FIG. 5A, tab cutting may be performed on a side of the current collector 110 of the electrode sheet 100B that is not coated with the active material layer 130, as shown by a dashed line L3. After cutting, referring to FIG. 5B, a plurality of tabs 150' spaced apart along a length direction of the electrode sheet 100B are formed. The tabs 150' extend from the first edge 160e of the electrode sheet body 160 along the direction D1. Different from the embodiments described above with reference to FIG. 1A to FIG. 3D, in the electrode sheet 100B of this embodiment, the tabs 150' are only composed of the tab bare foil region. A boundary 130b' between the active material layer 130 and the tabs 150' (i.e., the tab bare foil region) may be aligned with the first edge 160e along the length direction of the electrode sheet.

In this embodiment, similar to those described above with reference to FIG. 1A to FIG. 3D, the tabs 150' may include the first stiffener region 191 and the second stiffener region 192. The second stiffener region 192 is closer to the boundary 130b' between the active material layer 130 and the tabs 150'. The depth of the stiffener 190 in the first stiffener region 191 is greater than the depth of the stiffener 190 in the second stiffener region 192. By setting the depth of the stiffener in the second stiffener region 192 to be less than the depth of the stiffener in the first stiffener region 191, it is possible to avoid that the depth of the stiffener in the second stiffener region 192 is too deep, which causes the active material to detach. Meanwhile, if the stiffener in the second stiffener region are eliminated, the tabs may fold over in the second stiffener region.

In addition, the electrode sheet 100B may include the third stiffener region 193, and the third stiffener region 193 is located at a portion of the surface of the active material layer 130 adjoining the boundary 130b'. The stiffener 190 extend into the region of the electrode sheet body 160, so that stiffener is disposed in the third stiffener region 193. The stiffener in the third stiffener region 193 may be provided to increase the bending resistance strength provided by the stiffener for the tabs.

In some embodiments, the depth of the stiffener in the third stiffener region 193 is greater than the depth of the stiffener in the second stiffener region 192. In this way, the second stiffener region 192 with the smallest depth may be used for transition between the first stiffener region 191 and the third stiffener region 193. By setting the depth of the stiffener in the second stiffener region 192 to be shallower than the depth of the stiffener in both the first stiffener region 191 and the third stiffener region 193, the second stiffener region 192 with a smaller depth is utilized for transition between the first stiffener region 191 and the third stiffener region 193, which may make the tab bending process easier when the electrode assembly is inserted into the housing, reduce the possibility of tab tearing, and avoid the stress generated by bending from being transmitted to the boundary 130b' and causing the active material to detach.

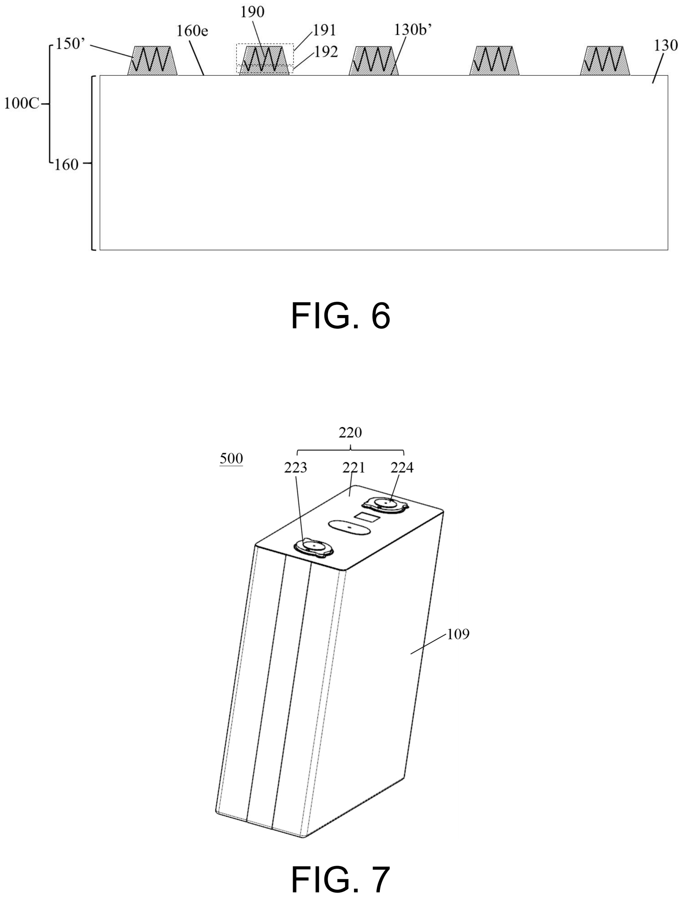

FIG. 6 illustrates a schematic diagram of an electrode sheet 100C according to yet another embodiment of the present disclosure. Referring to FIG. 6, in this embodiment, in an electrode sheet 100C of this embodiment, the tabs 150' are only composed of the tab bare foil region. The boundary 130b' between the active material layer 130 and the tabs 150' (i.e., the tab bare foil region) may be aligned with the first edge 160e along the length direction of the electrode sheet. The tabs 150' may include the first stiffener region 191 and the second stiffener region 192. The second stiffener region 192 is closer to the boundary 130b' between the active material layer 130 and the tabs 150'. The depth of the stiffener in the first stiffener region 191 may be greater than the depth of the stiffener in the second stiffener region 192. By setting the depth of the stiffener in the second stiffener region 192 to be less than the depth of the stiffener in the first stiffener region 191, it is possible to avoid that the depth of the stiffener in the second stiffener region 192 is too deep, which causes the active material to detach; meanwhile, the possibility of tab folding over is reduced.

In this embodiment, the stiffener 190 does not extend onto the active material layer 130, and the tabs 150' are not provided with the third stiffener region. Other aspects of the electrode sheets 100B and 100C may be similar to the electrode sheet 100 described above, and the description will not be repeated here.

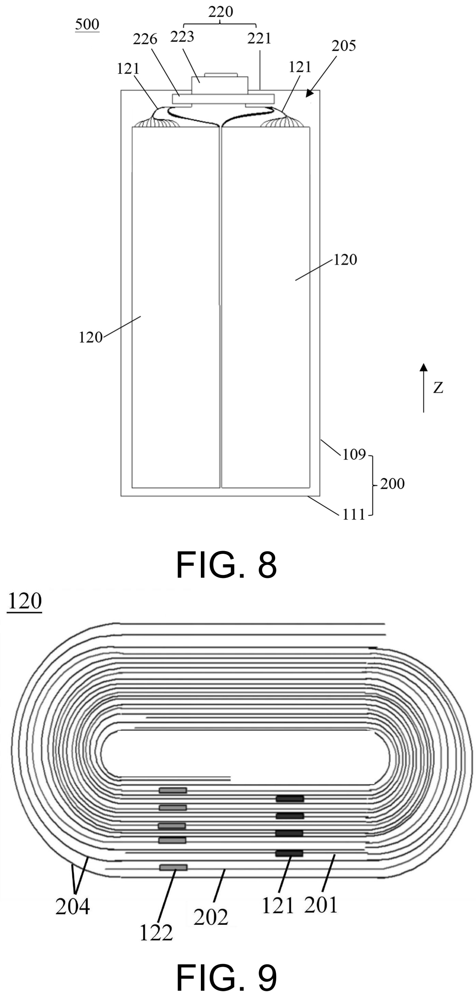

FIG. 7 illustrates a perspective diagram of a secondary battery according to an embodiment of the present disclosure. FIG. 8 illustrates a sectional diagram of a secondary battery according to an embodiment of the present disclosure. FIG. 9 is a sectional diagram of an electrode assembly of the secondary battery in FIG. 8.

As shown in FIG. 7 to FIG. 8, a secondary battery 500 may include a housing 200. The housing 200 includes a peripheral wall 109 and an end wall 111 connected to one end of the peripheral wall 109, and an opening 205 is provided at the other end of the peripheral wall 109 opposite to the end wall 111. A top cover assembly 220 covers the opening 205 of the housing 200, so as to define an accommodating cavity together with the housing 200, and an electrode assembly 120 is located in the accommodating cavity.

A direction from the end wall 111 toward the top cover assembly 220 is a height direction Z of the secondary battery 500. The height direction Z may correspond to the above-mentioned direction D1. In this embodiment, along a thickness direction of the electrode assembly 120, two electrode assemblies 120 are stacked and disposed in the housing 200. In other embodiments, more than two electrode assemblies 120 may be disposed in the housing 200.

In some embodiments, referring to FIG. 9, the electrode assembly 120 is a wound body formed by winding a first electrode sheet 201, a second electrode sheet 202, and a separator 204 located between the first electrode sheet 201 and the second electrode sheet 202. In other embodiments, the electrode assembly 120 may also be a stacked body formed by sequentially stacking the first electrode sheet 201, the second electrode sheet 202, and the separator 204 located between the first electrode sheet 201 and the second electrode sheet 202. The electrode assembly 120 may be flat-shaped. Correspondingly, the housing 200 may have a flat shape and have a rectangular parallelepiped shape. A plurality of first tabs 121 of the first electrode sheet 201 and a plurality of second tabs 122 of the second electrode sheet 202 may be stacked in the thickness direction of the electrode assembly 120 respectively.

As shown in FIG. 7 to FIG. 9, the top cover assembly 220 includes a top cover body 221 and a first electrode terminal 223 and a second electrode terminal 224 disposed on the top cover body 221. The first electrode terminal 223 and the second electrode terminal 224 may pass through the top cover body 221 and be insulated from the top cover body 221. One of the first electrode terminal 223 and the second electrode terminal 224 is a positive electrode terminal, and the other is a negative electrode terminal. A tab is provided at one end of the electrode assembly 120 facing the top cover assembly 220. In this embodiment, the first tab 121 and the second tab 122 at one end of the electrode assembly 120 are respectively connected to the corresponding first electrode terminal 223 and second electrode terminal 224. In some embodiments, the first tab 121 and the first electrode terminal 223, as well as the second tab 122 and the second electrode terminal 224 may be connected through corresponding adapter pieces 226. The first tab 121 and the second tab 122 may be welded and connected to the adapter pieces 226 after being bent.

In some embodiments, one of the first electrode sheet 201 and the second electrode sheet 202 is the positive electrode sheet, and the other is the negative electrode sheet. In some embodiments, at least one of the positive electrode sheet and the negative electrode sheet of the electrode assembly 120 is the electrode sheet 100, the electrode sheet 100A, the electrode sheet 100B or the electrode sheet 100C. Correspondingly, one of the first tab 121 and the second tab 122 is a positive electrode tab, and the other is a negative electrode tab. At least one of the positive electrode tab and the negative electrode tab of the electrode assembly 120 is the corresponding tab 150 or the tab 150' of the electrode sheet 100, the electrode sheet 100A, the electrode sheet 100B or the electrode sheet 100C. In some embodiments, the negative electrode sheet of the electrode assembly 120 is the electrode sheet 100, the electrode sheet 100A, the electrode sheet 100B or the electrode sheet 100C, and the negative electrode tab is the tab 150 or the tab 150'.

It should be understood that FIG. 7 to FIG. 9 are illustrated by taking a prismatic-housing battery as an example of the secondary battery. The electrode sheet 100, electrode sheet 100A, the electrode sheet 100B or the electrode sheet 100C of the present disclosure may also be provided to form any other appropriate types of secondary batteries, such as pouch batteries, columnar batteries, etc.

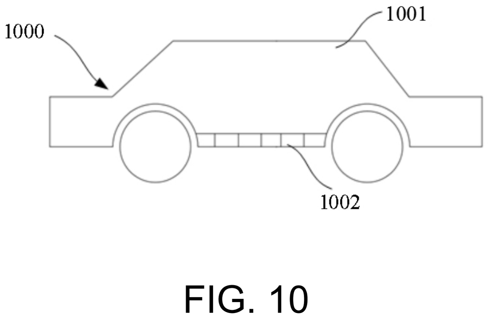

FIG. 10 illustrates a schematic diagram when an electronic device of an embodiment of the present disclosure is a vehicle. Referring to FIG. 10, the present disclosure also provides an electronic device 1000. In the following embodiments, for convenience of description, the electronic device 1000 being a vehicle is taken as an example for description. A battery pack 1002 is disposed inside the vehicle, and the battery pack 1002 may be disposed at the bottom, head or tail of the vehicle body 1001. The battery pack 1002 may be provided for power supply of the vehicle, for example, the battery pack 1002 may serve as an operating power source of the vehicle. An operation part of the electronic device 1000 is electrically connected to the battery pack 1002 to obtain electrical energy support. The vehicle may be a fuel vehicle, a gas vehicle or a new energy vehicle, and the new energy vehicle may be a pure electric vehicle, a hybrid vehicle or an extended-range vehicle, etc., but is not limited thereto. The operation part is the vehicle body, and the battery pack 1002 is provided at the bottom of the vehicle body and provides electrical energy support for the operation of the vehicle or the operation of electrical components in the vehicle. However, in some other embodiments, the electronic device 1000 may also be a mobile phone, a portable device, a notebook computer, a ship, a spacecraft, an electric toy, an electric tool, etc. The spacecraft includes airplanes, rockets, space shuttles and spaceships, etc. The operation part may be a unit component that obtains the electrical energy of the battery pack 1002 and perform corresponding operations, such as a blade rotation unit of a fan, a dust collection working unit of a vacuum cleaner, etc. The electric toys include fixed or mobile electric toys, for example, game consoles, electric car toys, electric ship toys and electric airplane toys, etc. The electric tools include metal cutting electric tools, grinding electric tools, assembly electric tools and railway electric tools, for example, electric drills, electric grinders, electric wrenches, electric screwdrivers, electric hammers, impact drills, concrete vibrators and electric planers, etc. The embodiments of the present disclosure do not impose special limitations on the electronic device 1000. The battery pack 1002 may include a plurality of secondary batteries, such as the secondary battery 500 described above.

## Claims

1. An electrode sheet (100, 100A, 100B, 100C), comprising:
an electrode sheet body (160), comprising a current collector (110) and an active material layer (130), wherein the current collector (110) has two opposite surfaces along a thickness direction of the current collector (110), and the two surfaces are respectively coated with the active material layer (130); and
a tab (150, 150'), extending from the electrode sheet body (160) along a first direction (D1), wherein the tab (150, 150') is provided with a second stiffener region (192) and a first stiffener region (191) along the first direction (D1), wherein, along the first direction (D1), the second stiffener region (192) is disposed between the first stiffener region (191) and the active material layer (130), a stiffener (190) is provided in the first stiffener region (191) and the second stiffener region (192), wherein, a depth (H1) of the stiffener (190) in the first stiffener region (191) is greater than a depth (H2) of the stiffener (190) in the second stiffener region (192).

2. The electrode sheet (100, 100A, 100B, 100C) according to claim 1, wherein the tab (150, 150') comprises a tab bare foil region (152) and a tab coated region (154), the tab coated region (154) is connected between the tab bare foil region (152) and the electrode sheet body (160), the active material layer (130) is further coated in the tab coated region (154),
the tab (150, 150') is further provided with a third stiffener region (193), the third stiffener region (193) is located at a portion of a surface of the active material layer (130) in the tab coated region (154), a stiffener (190) in the third stiffener region (193) and the stiffener (190) in the second stiffener region (192) form a continuous stiffener (190),
wherein, a depth (H3) of the stiffener (190) in the third stiffener region (193) is greater than the depth (H2) of the stiffener in the second stiffener region (192).

3. The electrode sheet (100, 100A, 100B, 100C) according to claim 2, wherein a ratio between the depth (H3) of the stiffener (190) in the third stiffener region (193) and a thickness of the active material layer (130) where the stiffener (190) is located is 30%-85%.

4. The electrode sheet (100, 100A, 100B, 100C) according to claim 2, wherein the stiffener (190) in the first stiffener region (191), the stiffener (190) in the second stiffener region (192), and the stiffener (190) in the third stiffener region (193) form at least one continuous stiffener (190); or,
the stiffener (190) in the first stiffener region (191) and the stiffener (190) in the second stiffener region (192) form at least one continuous stiffener (190).

5. The electrode sheet (100, 100A, 100B, 100C) according to claim 4, wherein a ratio of a width of the at least one continuous stiffener (190) to a corresponding depth of a location of each of the at least one continuous stiffener (190) is a, 1.1≤a≤6.67.

6. The electrode sheet (100, 100A, 100B, 100C) according to claim 2, wherein the tab (150, 150') is connected with a first edge (160e) of the electrode sheet body (160), the first edge (160e) extends along a second direction (D2) perpendicular to the first direction (D1),
the stiffener (190) in the third stiffener region (193) has an end portion (198) in a direction opposite to the first direction (D1), and a gap (d) is provided between the end portion (198) and the first edge (160e) along the direction opposite to the first direction (D1).

7. The electrode sheet (100, 100A, 100B, 100C) according to claim 6, wherein the stiffener (190) in the third stiffener region (193) comprises two stiffeners arranged at an angle, and the two stiffeners are connected with each other to form a V-shaped structure (199).

8. The electrode sheet (100, 100A, 100B, 100C) according to claim 2, further comprising:
a conductive layer (125), wherein a portion of the conductive layer (125) is located between the active material layer (130) of the electrode sheet body (160) and the current collector (110), and another portion of the conductive layer (125) extends along the first direction (D1) to the third stiffener region (193), and the active material layer (130) in the tab coated region (154) covers the another portion of the conductive layer (125),
wherein, the stiffener (190) in the third stiffener region (193) has an end portion (198) in a direction opposite to the first direction (D1), and the end portion (198) overlaps with the conductive layer (125) along a thickness direction of the electrode sheet (100, 100A, 100B, 100C).

9. The electrode sheet (100, 100A, 100B, 100C) according to claim 4, wherein the tab (150, 150') is connected with a first edge (160e) of the electrode sheet body (160), and a second edge (150e) of the tab (150, 150') and the first edge (160e) are disposed on two sides of the tab (150, 150') in the first direction (D1),
the continuous stiffener (190) has at least one first transition portion (1901) and at least one second transition portion (1902), and the first transition portion (1901) and the second transition portion (1902) are alternately provided in a width direction of the tab (150, 150') perpendicular to the first direction (D1) and are connected through a connecting portion (1903);
wherein the first transition portion (1901) and the second transition portion (1902) are arc transition regions, an inner angle of the first transition portion (1901) faces the first edge (160e), and an inner angle of the second transition portion (1902) faces the second edge (150e);
a maximum width of the arc transition region is y1, a width of the connecting portion (1903) perpendicular to an extending direction of the connecting portion (1903) is y2, 1.2≤y1/y2≤2.5.

10. The electrode sheet (100, 100A, 100B, 100C) according to claim 9, wherein a spacing between vertices of two of the adjacent first transition portions (1901) of the continuous stiffener (190) is b,
wherein, in the width direction of the tab (150, 150'), the tab (150, 150') has a maximum width C1 and a minimum width C2, wherein: 1.5≤C1/b≤3, and/or, within a range of 1.5≤C2/b≤3.

11. A secondary battery (500), comprising:
an electrode assembly (120), wherein the electrode assembly (120) comprises a positive electrode sheet (201), a negative electrode sheet (202), and a separator (204) located between the positive electrode sheet (201) and the negative electrode sheet (202),
wherein, at least one of the positive electrode sheet (201) and the negative electrode sheet (202) is the electrode sheet (100, 100A, 100B, 100C) according to any one of claims 1-10.

12. An electronic device (1000), comprising the secondary battery (500) according to claim 11.
